# EUROPEAN PATENT SPECIFICATION

(11) **EP 1 650 092 B1**
(45) Date of publication and mention of the grant of the patent: **09.12.2009**
(21) Application number: 05380232.8
(22) Date of filing: 20.10.2005
(51) Int. Cl.: B60T 7/10

(54) **Device for actuating a parking brake with noise-reduction mechanism**
Geräuscharme Feststellbremsbetätigungsvorrichtung
Dispositif de réduction de bruit pour un frein de stationnement

(30) Priority: 22.10.2004 ES 200402515
(43) Date of publication of application: 26.04.2006
(73) Proprietor: Batz, S.Coop., 48140 Igorre (Bizkaia) (ES)
(72) Inventor: Palacio Argüelles, Joseba, 48980 Santurtzi (Bizkaia) (ES); Bidaguren Diego, Iñigo, 48003 Bilbao (ES); Intxaurbe Iriondo, Jatsu, 48142 Artea (Bizkaia) (ES)
(74) Representative: Fernandez Guzman, Juan

(56) References cited:
- EP-A- 0 771 706
- EP-A- 1 378 410
- WO-A1-01/10688
- DE-A1- 19 538 108
- PATENT ABSTRACTS OF JAPAN vol. 2000, no. 20, 10 July 2001 (2001-07-10) & JP 2001 071876 A (NAMIKOO KK), 21 March 2001 (2001-03-21)

## Description

### Technical field

The present invention relates to a parking brake actuating device with noise-reduction mechanism, where a main lever is disposed to tighten a cable of the braking mechanism, and a pawl catch is pushed against a toothed sector by means of a specific spring less resilient than a pusher spring of a pawl release button.

### Prior art

Brake actuating devices that comprise a lever pivotally mounted on a bracket fixed to the motor vehicle chassis and disposed to be actuated manually to tighten a cable of a brake mechanism are well known in the prior art. A pawl mechanism enables the lever to be rotated in a braking direction but prevents its rotation in an opposite direction, as a result of which the lever remains in the position of maximum tightness reached. On the lever is disposed a button that can be pressed manually to release the pawl mechanism and thereby relieve the tension of the cable to release the brake mechanism. Generally, the pawl mechanism includes a pawl lever pivotally mounted on said main lever, and this pawl lever has at least one catch adapted to engage a toothed sector fixed onto the aforementioned bracket of the main lever. The button and the pawl lever are connected mechanically by means of a push rod, and a spring is disposed to push the button towards an extended non-operating position and at the same time to push the catch of the pawl lever against the toothed sector.

The teeth on the toothed sector include a succession of peaks and valleys, and when the main lever is rotated to tighten the brake cable, the pawl catch slides on the toothed sector, rotates to overcome a peak, and after overcoming each peak, the spring pushes the catch against the bottom of the next valley producing a clicking that can be bothersome. The force of this clicking is determined by the force of the spring and by the mass of the members displaced during the clicking, which in this case includes the pawl lever, the push rod and the button.

The patent KR 00207220, of HYUNDAI MOTOR COMPANY, describes a noise-reduction mechanism for a lever actuating a hand brake in a motor vehicle, of the type mentioned above, in which one end of the push rod is connected to the button in a sliding manner. The mechanism includes a first spring, or main spring similar to the conventional one, for the return of the button to its extended position, and a second spring, or pawl spring, disposed inside the button, between an internal wall of the button and a stopper fixed to the push rod, to push the pawl catch against the toothed sector. The force of the pawl spring is smaller than the force of the main spring, as a result of which the force of the clicking, and consequently the noise produced, is smaller. However, the push rod is subjected to movements during the clicking.

The international patent application WO 01/10688, of EDSCHA AG, describes a parking brake actuating device in which a push rod is housed in a movable manner inside the main lever, with a first end connected to the button and a second end disposed to make contact, when the push rod is moved by the actuating of the button, against the pawl lever to make it rotate in a direction of disengagement. A main spring is disposed to push the button-and-push-rod unit out of the main lever, and a second spring, or pawl spring, is disposed under compression between a stopper fixed to the main lever and the pawl lever to push the catch against the toothed sector. The push rod only pushes the pawl lever when it has exceeded a minimum distance between the end of the push rod and the pawl lever. The end of the push rod adjacent to the pawl lever is guided by a slide and pin mechanism, which makes the device more complex and makes assembly more difficult.

### Disclosure of the invention

The present invention helps overcome the previous drawbacks by providing a parking brake actuating device with noise-reduction mechanism, of the type that comprises a main lever pivotally mounted on a bracket and disposed to be actuated manually to activate a brake mechanism; a pawl member mounted movably on said main lever and which has at least one catch adapted to engage in a toothed sector fixed on said bracket; a pawl spring disposed to push said catch against said toothed sector; a button mounted slidingly on the main lever and connected to a first end of a movable push rod, which has a second end adapted to push said pawl member in a direction suitable to disengage the catch of the toothed sector, when said button is actuated; and a main spring disposed to return the button to an extended position in relation to the main lever. The device is characterised in that the second end of the push rod defines a pusher wall configured to surround at least in part a support defined in said pawl member, and said pawl spring is disposed between a portion of said pawl member and a portion of the push rod to push said support of the pawl member towards said pusher wall of the push rod.

The pawl spring exerts a smaller force than the main spring, as a result of which the pawl spring absorbs the successive movements that the pawl member makes when it overcomes the peaks of the toothed sector whereas the more resilient main spring remains unaltered pushing the button-and-push-rod unit towards its extended position. As a consequence, the force that pushes the catch to the bottom of a valley after each peak is smaller and the mass moved corresponds solely to the pawl member, which results in a significant reduction in the clicking noise of the pawl member against the toothed sector. When the button is pressed manually, the main spring gives way, enabling the movement of the push rod to push the pawl member and thereby disengage the catch from the toothed sector.

In addition, this construction enables the button-and-push-rod unit, which are preferably formed by a single part, and the pawl member to be mutually assembled, with the pawl spring acting as a link between the two, before they are installed in the main lever, thereby greatly facilitating assembly. The inventive device also implies a reduction in the number of parts in relation to other known devices provided with a double spring.

### Description of the drawings

The foregoing and other features and advantages of the invention will be made more evident in the light of the following detailed description of examples of the embodiment, reference being made to the accompanying drawings, in which:
Fig. 1 is a cross-sectional view of a parking brake actuating device with noise-reduction mechanism in accordance with an example of an embodiment of the present invention wherein the brake is shown in an activated condition;
Fig. 2 is a cross-sectional view of the device in Fig. 1 wherein the brake is shown prior to a deactivated condition;
Fig. 3 is a cross-sectional view of the device in Fig. 1 wherein the brake is shown in a deactivated condition;
Fig. 4 is an enlarged partial cross-sectional view of key members of the device in Fig. 1.

### Detailed description of the invention

The figures show a parking brake actuating device with noise-reduction mechanism in accordance with an example of embodiment of the present invention. The device comprises a main lever 1 pivotally mounted in relation to an axis 24 on a bracket 2 fixed to the chassis of a motor vehicle. The aforementioned main lever 1 is disposed to be actuated manually by a user to tighten a cable and another member activating a parking brake mechanism. The tension of said cable increases as the free end of the main lever 1 is raised.

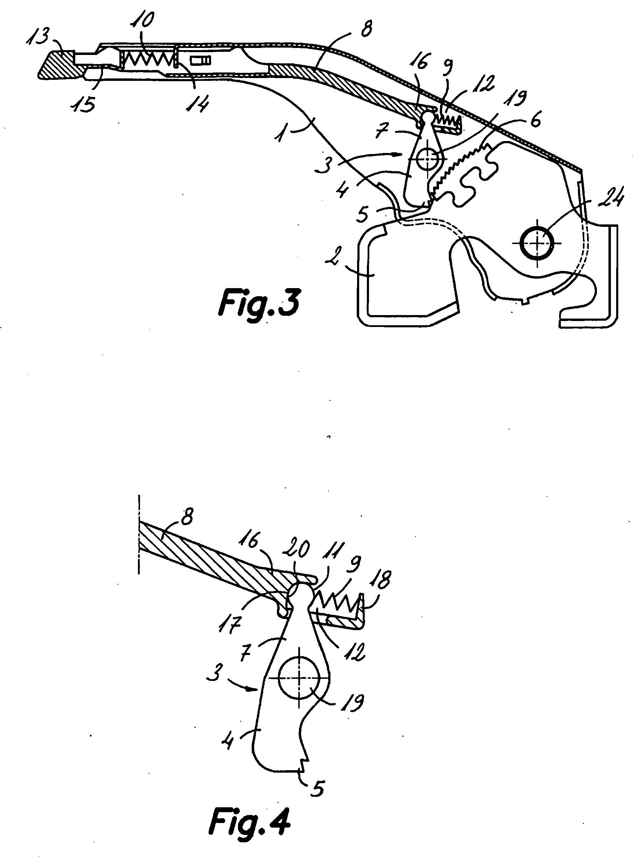

Upon the main lever 1 is mounted a pawl member, which, in the illustrated example, has the form of a pawl lever 3 pivotally mounted in relation to an axis 19, but which can adopt other configurations, such as for example, that of an appropriately guided sliding element. In this example, the aforementioned pawl lever 3 has a first arm 4 on a first side of said axis 19 and a second arm 7 on a second side of the axis 19, opposite to the first. On the aforementioned first arm 4 is formed at least one catch 5 adapted to engage in a toothed sector 6 fixed onto said bracket 2, whereas on the aforementioned second arm 7 is located a support 20 and a configuration 11, more clearly shown in Fig. 4, and whose function is explained below.

On the aforementioned free end of the main lever 1 is a button 13, slidingly mounted and connected to a first end 15 of a movable push rod 8, which has a second end 16 situated fast to the aforementioned support 20 of the pawl lever 3. This second end 16 is adapted to make contact with the support 20 and push the pawl lever 3 in a suitable direction to separate the aforementioned catch 5 from said toothed sector 6, when said button 13 is actuated. The disengagement between the catch 5 and the toothed sector frees the pawl mechanism, which enables the main lever 1 to be depressed, thereby deactivating the parking brake. In the examples of embodiment shown, the button 13 and the push rod 8 form a single part, although they can be parts made separately and subsequently joined together with an identical result. To return the button 13 to an extended position in relation to the main lever 1, after having been pressed, between the button 13 and a stopper 14 connected to the main lever 1 is disposed a main spring 10.

Between the second end 16 of the push rod 8 and the support 20 of the second arm 7 of the pawl lever 3 exists an elastic link provided by a pawl spring 9, which exerts a smaller force than the main spring 10. Thus, the second end 16 of the push rod 8 defines a pusher wall 17 configured to surround loosely at least in part the support 20 defined in the second arm 7 of the pawl lever 3, and said pawl spring 9 is disposed between a portion of the pawl lever 3 and a portion of the push rod 8 to push the support 20 towards said pusher wall 17. This pawl spring 9 acts at the same time to push the first arm 4 of the pawl lever 3, and consequently the catch 5, against said toothed sector 6. Preferably, the pawl lever 3 and the second end 16 of the push rod 8 are configured and disposed to be in mutual contact at least while the main lever 1 is in a non-operating position with said brake mechanism deactivated.

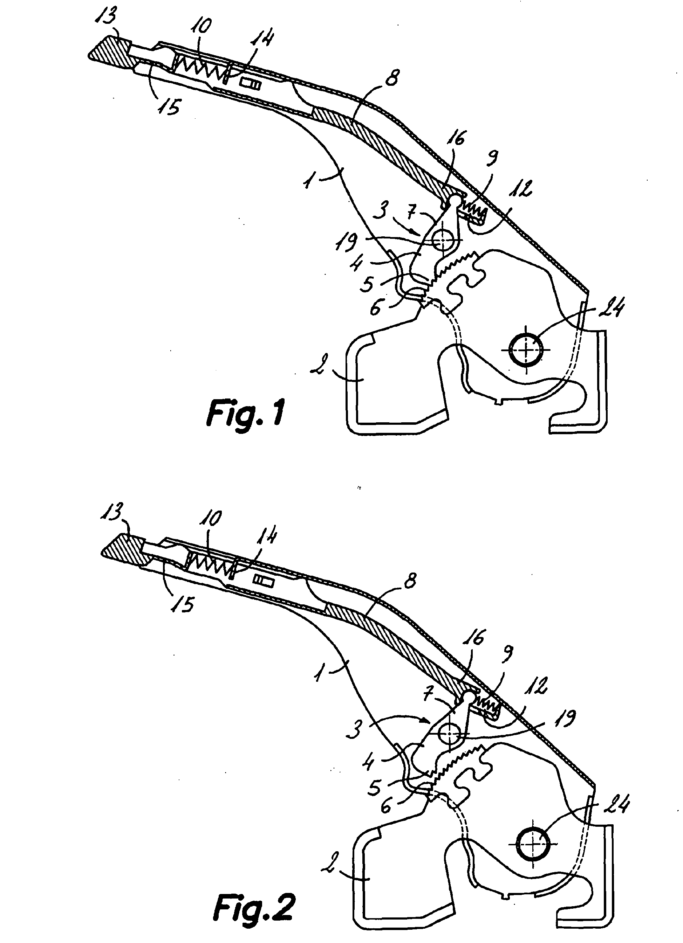

In the example of embodiment shown in Figs. 1 to 4, the second end 16 of the push rod 8 comprises a housing 12 in which are defined the pusher wall 17 and a stopper 18 facing it (better shown in Fig. 4). A final portion of the second arm 7 of the pawl lever 3 is housed in said housing 12, so that the support 20 is fast to the pusher wall 17. The pawl spring 9 is disposed under compression between said stopper 18 and the aforementioned configuration 11, which is formed on said final end of the second arm 7, on the side opposite to the support 20. Subsequently, the pawl spring 9 pushes the support 20 of the second arm 7 towards the pusher wall 17 and the catch 5 of said first arm 4 towards the toothed sector 6.

The incorporation of the spring of a pawl 9 less resilient than the main spring 10 reduces and regulates the noise produced by the clicking of the catch 5 against the toothed sector 6 when the main lever is actuated to activate the parking brake, irrespective of the force that the user perceives when pressing the button 13. In addition, the device of the present invention enables a "pre-assembly" of the part that constitutes the button 13 and the push rod 8 together with the pawl lever 3 (Fig. 4), where the pawl spring 9 keeps both parts connected and ready to be installed in the main lever 1. It also permits a noise-reduction mechanism with a minimum number of additional parts.

A person skilled in the art will be capable of making variations and modifications to the example of embodiment shown and described without exceeding the scope of the present invention as defined in the following claims.

## Claims

1. Parking brake actuating device with noise-reduction mechanism of the type that comprises:
a main lever (1) mounted pivotally on a bracket (2) and disposed to be actuated manually to activate a brake mechanism;
a pawl member mounted movably on said main lever (1) and which has at least one catch (5) adapted to engage in a toothed sector (6) fixed onto said support (2);
a pawl spring (9) disposed to push said catch (5) against said toothed sector (6);
a button (13) mounted slidingly on the main lever (1) and connected to a first end (15) of a movable push rod (8), which has a second end (16) adapted to push said pawl member in an direction suitable to disengage the catch (5) of the toothed sector (6), when said button (13) is actuated; and
a main spring (10) disposed to return the button (13) to an extended position in relation to the main lever (1);
wherein the second end (16) of the push rod (8) defines a pusher wall (17, 21) configured to surround loosely at least in part a support (20) defined in said pawl member, said pawl spring (9) is disposed between a portion of said pawl member and a portion of the push rod (8) to push said support (20) of the pawl member towards said pusher wall (17, 21) of the push rod (8), and the pawl spring (9) exerts a smaller force than the main spring (10), said pawl member having a pawl lever (3) mounted on the main lever (1) to pivot in respect to an axis (19), said pawl lever (3) having, on a first side of said axis (19), a first arm (4) on which said catch (5) is positioned and, on a second side of the axis (19), opposite to the first, a second arm (7) on which said support (20) is positioned, **characterised in that** said second end (16) of the push rod (8) comprises a housing (12) that defines a pusher wall (17) and a stopper (18) facing it, a portion of said second arm (7) of the pawl lever (3) being housed in said housing (12) with said support (20) fast to said pusher wall (17) and with said pawl spring (9) disposed under compression between said stopper (18) and a configuration (11) formed in said second arm (7) to push the support (20) of the second arm (7) towards the pusher wall (17) and the catch (5) of said first arm (4) towards the toothed sector (6).

2. Device in accordance with claim 1, wherein the pawl member and the second end (16) of the push rod (8) are configured and disposed to be in mutual contact at least while the main lever (1) is in a non-operating position with said brake mechanism deactivated.

3. Device in accordance with claims 1 or 2, wherein the button (13) and the push rod (8) are formed in a single part.

## Patentansprüche

1. Betätigungsvorrichtung der Feststellbremse mit Mechanismus zur Geräuschverringerung von einem Typ, der umfasst:
einen Haupthebel (1), welcher drehgelenkig auf einem Tragarm (2) montiert und für die manuelle Betätigung zum Betreiben eines Bremsmechanismus angeordnet ist;
ein beweglich montiertes Sperrelement auf dem Haupthebel (1), welches mindestens mit einer Klinke (5) ausgestattet ist, die in einem auf der Halterung (2) befestigten Sektor mit Zähnen (6) einrastet;
eine Klinkenfeder (9), welche so angeordnet ist, dass sie die Klinke (5) gegen den mit Zähnen versehenen Sektor (6) drückt;
einen verschiebbar auf dem Haupthebel (1) montierten und mit einem ersten Ende (15) einer beweglichen Schubstange (8) verbundenen Knopf (13), an welcher sich ein zweites Ende (16) befindet, das so ausgelegt ist, dass es das Sperrelement in eine geeignete Richtung drückt, um die Klinke (5) aus dem mit Zähnen versehenen Sektor (6) auszurasten, wenn der Knopf (13) betätigt wird; und
eine Hauptfeder (10), die so angeordnet ist, dass sie den Knopf (13) in eine ausgefahrene Stellung bezüglich des Haupthebels (1) drückt;
wobei das zweite Ende (16) der Schubstange (8) eine Schubwand (17, 21) definiert, welche so ausgelegt ist, dass sie zumindest teilweise eine im Sperrelement ausgebildete Halterung (20) lose umgibt, wobei die Klinkenfeder (9) zwischen einem Abschnitt des Sperrelements und einem Abschnitt der Schubstange (8) angeordnet ist, um die Halterung (20) des Sperrelements in Richtung der Schubwand (17, 21) der Schubstange (8) zu drücken, und die Klinkenfeder (9) eine geringere Kraft als die Hauptfeder (10) ausübt, wobei die Sperrelement mit einem Sperrhebel (3) versehen ist, der auf dem Haupthebel (1) montiert ist, um sich um eine Achse (19) zu drehen, wobei der Sperrhebel (3) an einer ersten Seite der Achse (19) einen ersten Arm (4) besitzt, auf dem die Klinke (5) angebracht ist, und an der zweiten Seite der Achse (19), gegenüber dem ersten Arm, einen zweiten Arm (7) umfasst, auf dem die Halterung (20) angebracht ist,
**dadurch gekennzeichnet, dass** das zweite Ende (16) der Schubstange (8) ein Gehäuse (12) umfasst, welches eine Schubwand (17) und einen gegenüberliegenden Stopper (18) ausbildet, wobei ein Abschnitt des zweiten Arms (7) des Sperrhebels (3) in dem Gehäuse (12) untergebracht ist, wobei die Halterung (20) fest an der Schubwand (17) anliegt und die Klinkenfeder (9) unter Druck zwischen dem Stopper (18) angeordnet ist und im zweiten Arm (7) eine Konfiguration (11) gebildet wird, um die Halterung (20) des zweiten Arms (7) zur Schubwand (17) und die Klinke (5) des ersten Arms (4) zu dem mit Zähnen versehenen Sektor (6) zu drücken.

2. Vorrichtung gemäß Anspruch 1, wobei das Sperrelement und das zweite Ende (16) der Schubstange (8) so ausgebildet und angeordnet sind, dass sie, zumindest während sich der Haupthebel (1) in der Nicht-Betriebsstellung befindet und der Bremsmechanismus nicht betätigt ist, untereinander in Berührung stehen.

3. Vorrichtung gemäß Anspruch 1 oder 2, wobei der Knopf (13) und die Schubstange (8) aus einem einzigen Teil geformt sind.

## Revendications

1. Dispositif d'actionnement de frein à main avec mécanisme de réduction de bruit du type qui comprend :
un levier principal (1) monté comme un pivot sur un support (2) et disposé de manière à être actionné manuellement pour activer un mécanisme de frein ;
un cliquet monté sur ledit levier principal (1) de manière à être mobile et qui dispose d'au moins un loquet (5) adapté pour s'engager dans un secteur dentelé (6) fixé sur ledit support (2) ;
un ressort de cliquet (9) disposé de manière à pousser ledit loquet (5) contre ledit secteur dentelé (6) ;
un bouton (13) monté sur le levier principal (1) de manière à glisser dessus et connecté à une première extrémité (15) d'une tige de poussée mobile (8) dotée d'une seconde extrémité (16) adaptée pour pousser ledit cliquet dans un sens adapté pour désengager le loquet (5) du secteur dentelé (6) lorsque ledit bouton (13) est actionné; et
un ressort principal (10) disposé de manière à replacer le bouton (13) sur une position étendue par rapport au levier principal (1) ;
où la seconde extrémité (16) de la tige de poussée (8) définit une paroi directrice (17, 21) configurée pour entourer sans serrer et au moins partiellement, un support (20) défini dans ledit élément de cliquet, ledit ressort de cliquet (9) est placé entre une portion dudit élément de cliquet et une portion de la tige de poussée (8) pour pousser ledit support (20) de l'élément de cliquet vers ladite paroi directrice (17, 21) de la tige de poussée (8) et le ressort de cliquet (9) exerce une force inférieure à celle du ressort principal (10), ledit élément de cliquet étant doté d'un levier de cliquet (3) monté sur le levier principal (1) pour pivoter sur un axe (19), ledit levier de cliquet (3) ayant, sur un premier côté dudit axe (19), un premier bras (4) sur lequel ledit loquet (5) est positionné et, sur un second côté de l'axe (19), opposé au premier, un second bras (7) sur lequel ledit support (20) est positionné, **caractérisé en ce que** la seconde extrémité (16) de la tige de poussée (8) comprend une enceinte (12) qui définit une paroi directrice (17) et un butoir (18) placé face à elle, une portion dudit second bras (7) du levier de cliquet (3) étant abritée dans ladite enceinte (12) avec ledit support (20) relié à ladite paroi directrice (17) et avec ledit ressort de cliquet (9) comprimé entre ledit butoir (18) et une configuration (11) formée dans ledit second bras (7) pour pousser le support (20) du second bras (7) en direction de la paroi directrice (17) et le loquet (5) dudit premier bras (4) en direction du secteur dentelé (6).

2. Dispositif conformément à la revendication 1 où l'élément de cliquet et la seconde extrémité (16) de la tige de poussée (8) sont configurés et disposés de manière à être en contact l'un avec l'autre au moins pendant que le levier principal (1) est en position non opératoire avec ledit mécanisme de frein désactivé.

3. Dispositif conformément à les revendications 1 ou 2 où le bouton (13) et la tige de poussée (8) forment une seule et unique pièce.
